# EUROPEAN PATENT SPECIFICATION

(11) **EP 1 365 978 B1**
(45) Date of publication and mention of the grant of the patent: **28.03.2007**
(21) Application number: 02710642.6
(22) Date of filing: 07.02.2002
(51) Int. Cl.: B65G 33/18

(54) **SCREW CONVEYOR COMPRISING TWO CONCENTRIC SHAFTLESS SCREWS**
SCHNECKENFÖRDERER MIT ZWEI KONZENTRISCHEN, ACHSLOSEN SCHNECKEN
CONVOYEUR A VIS SANS FIN COMPRENANT DEUX VIS CONCENTRIQUES SANS AXE

(30) Priority: 07.02.2001 SE 0100281
(43) Date of publication of application: 03.12.2003
(73) Proprietor: Bälingetorp KB, 41262 Göteborg (SE)
(72) Inventor: LINDH, Paul, S-246 52 Löddeköpinge (SE)
(74) Representative: Wallin, Bo-Göran
(86) International application number: PCT/SE2002/000213
(87) International publication number: WO 2002/062683

(56) References cited:
- SE-B- 428 371
- SE-B- 464 130

## Description

### Field of the Invention

The present invention relates to a conveyor according to the preamble to independent claim 1.

### Background Art

Screw conveyors are today used within completely different fields. For instance, they are used to reload bulk commodities from ships to carriages. Another field of application is dewatering of sludge and the like in sewage treatment works.

A screw conveyor comprises as its main component a screw which rotates inside an outer pipe which is concentric with the screw. Because of the inertia of the material that is being conveyed and the friction between the pipe and the material, the material will not rotate quite as fast as the screw, which results in the material being conveyed by the screw in the same way as a nut engaging a rotary screw would do if the screw was prevented from rotating.

The screw usually consists of an inner shaft supporting a flange made of flat iron and attached to the shaft so as to describe a helix about the centre axis of the inner shaft. The screw conveyor part formed of the flange is usually called vane or scraper. There are also so-called shaft-less screw conveyors, in which the inner shaft has been eliminated by the flange being self-supporting, the flange describing a helix about the centre axis of the screw and extending between an inner and an outer radius.

To increase the speed of the material that is being conveyed, a counter-rotating outer pipe is sometimes used. By the outer pipe being counter-rotated, the speed of the material about the centre axis will differ still more from the rotary speed of the screw, which causes the material to be given a higher speed along the centre axis.

When separating faeces or other sludge in connection with sewage treatment plants, a special problem arises, viz. the sludge adheres to the vane of the screw conveyor.

For instance, WO98/15335, SE-B-457,637 and DE-C1-3,915,528 disclose various screw conveyors which are used in connection with sewage treatment plants. These screw conveyors are designed to separate solid particles and sludge from water which is conducted past the lower end of the screw conveyor. By the outer pipe being foraminated, a certain degree of dewatering of the sludge will take place as it is being conveyed upwards in the pipe. The publications describe different ways of performing such dewatering.

However, all of them suffer from the drawback that in case of heavy dewatering, the upwardly conveyed sludge tends to adhere to the vanes of the screw. If the sludge gets stuck, it will not longer be conveyed along the shaft of the screw, but will only be rotated along with the rotation of the screw. The commonest way of using screw conveyors in sewage treatment plants or the like is therefore only to dewater the sludge to a certain degree by means of the screw conveyor and then to dewater the sludge further to the desired degree in one or more additional steps after the screw conveyor. This is, however, not a satisfactory technique, on the one hand because of the installation costs and, on the other, as regards the required space.

### Summary of the Invention

An object of the invention thus is to provide a conveyor which is compact and gives a good dewatering capacity compared with prior art constructions.

Another object is to provide a conveyor which is simple, robust and inexpensive compared with prior art constructions.

SE-B-428 371, upon which the preamble of claim 1 is based, discloses a screw conveyor having two concentric screws coupled together by means of an electromagnetic coupling.

One more object is to provide a conveyor which constitutes an improvement relative to prior art constructions with respect to one or more of the drawbacks mentioned above.

According to the invention, these objects are achieved by a screw conveyor having the features as defined in independent claim 1.

The conveyor comprises a pipe and a first screw which is arranged inside and essentially concentrically with the pipe and which is rotatable relative to the pipe and comprises at least one vane which in the radial direction extends between a first inner radius and a first outer radius and which describes a first helix on a first geometric cylinder with said first inner radius. The conveyor further comprises a second screw which is arranged essentially concentrically with said pipe and said first screw, the second screw being arranged inside said first geometric cylinder, and the second screw being rotatable relative to the first screw.

By the conveyor comprising a second screw arranged inside an outer, so-called shaft-less (having no shaft) screw, a construction is obtained, where the screws coact so that the material that is being conveyed is affected by forces that are grinding and disintegrating. As a result, the conveyor is efficiently prevented from being clogged by material that otherwise tends to adhere to the vanes of the conveyor. Accumulations of material that would otherwise tend to adhere to a screw are efficiently disintegrated by the second screw. Moreover, it is in many cases favourable that the material conveyed is disintegrated. For instance, it is convenient that sludge which is to be composted is disintegrated to small particles. The coaction between the screws further makes it possible, if desirable, to obtain a considerably faster conveyance of the material than allowed with the corresponding speeds of rotation in prior art single screw constructions.

This constructional idea also presents great possibilities of variation regarding disintegrating capacity and conveying speed. For example, it is possible to use an inner screw with a smaller pitch and essentially the same speed of rotation to provide quick transport and at the same time achieve the desired disintegration. The combination of choosing the ratio of the pitch of the screws to the speed of rotation of the screws can be adjusted according to the desired degree of disintegration. For example, two screws with oppositely oriented pitches and the same speed of rotation will result in extremely quick transport since the material will be conveyed practically straight upwards at the same speed as would be achieved by a non-rotating nut. The two rotary motions counteracting on the material result in the material not following any of the rotary motions to a considerable extent. According to another example, it is possible to achieve great disintegration by the screws being designed with different pitches or being driven at different speeds of rotation.

Preferred embodiments will be evident from the dependent claims.

The second screw advantageously comprises at least one vane which in the radial direction extends between a second inner radius and a second outer radius and which describes a helix on a second geometric cylinder with said second inner radius. A shaft-less screw tolerates a certain degree of deflection without the conveyor jamming, since a shaft-less screw can perform a meandering motion, if necessary. This is advantageous, inter alia, since the associated construction elements can be made considerably simpler. For instance, the pipe can be made significantly simpler and, thus, less expensive since a certain degree of deflection can be tolerated.

Preferably, the second screw is rotatable relative to the pipe. This design causes one more relative motion, which further reinforces the above advantages as to conveying speed and disintegration.

According to a preferred embodiment, the second screw describes a helix which is oriented in the opposite direction relative to the helix of the first screw. By designing the screws so that their vanes follow helices which are oriented in opposite directions about their respective axes, the supporting of the screws can be simplified to a considerable extent. With this design, it is possible to adjust the outer diameter of the inner screw and the inner diameter of the outer screw, so that the inner screw with its outer edge will abut against the inner edge of the outer screw at a relatively large number of points. Thus, the two screws will to some extent guide each other while at the same time they can take up deflections since they can perform meandering motions relative to each other.

Preferably, the first and the second screw are arranged to be rotated in different directions about their respective centre axes. The screws will then coact to quickly convey the material upwards. If different speeds of rotation or pitches are employed, it will furthermore be possible to obtain disintegration of the material that is being conveyed.

According to another preferred embodiment, the second screw describes a helix which is oriented in the same direction as the helix of the first screw. With this design, it is possible to design the transmission of the screws to be extremely simple.

In connection with the embodiment just mentioned, it is advantageous that the first and the second screw are arranged to be rotated in the same direction about their respective centre axes. As a result, the screws will coact to quickly convey the material upwards. If different speeds of rotation or pitches are employed, it will also be possible to obtain disintegration of the material that is being conveyed.

According to a preferred embodiment, the second screw has a pitch which is smaller than the pitch of the first screw. This design affords good stability to the construction since the inner screw will abut against the outer screw at a plurality of points. Furthermore, owing to this construction, it will be ensured that material does not get stuck and a certain degree of disintegration is achieved even when the screws are rotated at the same speed. The fact that the screws can be rotated at essentially the same speed is in many cases desirable since the gearbox can then be made compact, robust and simple.

According to a preferred embodiment, the first screw has a pitch which varies along its longitudinal direction. For example, this design can be usable in dewatering processes since the characteristics of the material change as it is being dewatered.

According to a preferred embodiment, the second screw has a pitch which varies along its longitudinal direction. For example, this design can be usable in dewatering processes since the characteristics of the material change as it is being dewatered.

Preferably, the pipe is fixedly secured in terms of rotation. This is preferred if the construction is to be kept simple. For example, it is convenient that the pipe is stationary if the conveyor is to be partially buried in order to take up sludge from a sewer. If the pipe is to be buried and it should be rotatable, it would be necessary to cover the pipe with one more outer, stationary pipe. This construction, however, is complicated and places great demands on mounting since two pipes arranged one in the other have a pronounced tendency to jam even in case of small deflections. The combination involving a double screw and a stationary pipe thus is a simple and inexpensive construction which nevertheless yields an excellent function. In terms of safety, it is also convenient since there is no risk of the rotation of the pipe causing injury to an operator or damaging surrounding equipment.

Preferably, the pipe and the screws are inclined at an angle relative to the horizontal plane. By the conveyor being declined, gravity till press the material against the inside of the pipe and thus facilitate conveyance while at the same time water can flow downwards in the screw so as to obtain adequate dewatering.

In a preferred embodiment, the second screw is shaft-less, i.e. it has no physical shaft, which decreases the risk of conveyed material adhering to the screw. It will also make the screw more flexible so that a certain degree of deflection is possible without the conveyor jamming.

### Brief Description of the Drawings

The invention will now be described in more detail with reference to the accompanying schematic drawings which by way of example illustrate a currently preferred embodiment of the invention.

Fig. 1 is an exploded view showing parts of the inner and the outer screw.

Fig. 2 is a cross-sectional view illustrating the drive of the two screws.

Fig. 3 is a perspective view illustrating the two screws assembled as a unit.

### Detailed Description of a Preferred Embodiment

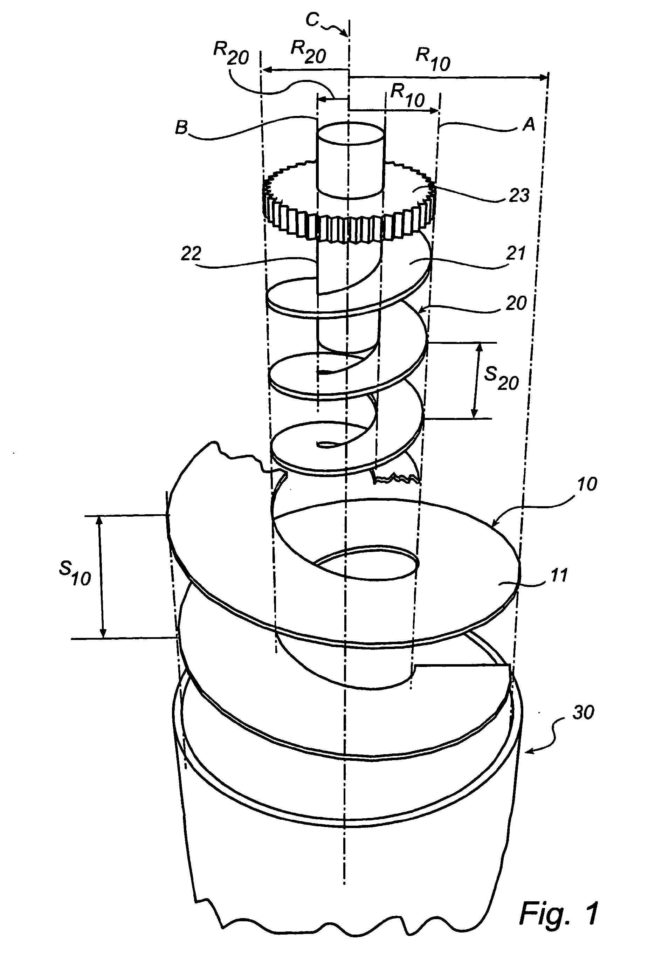

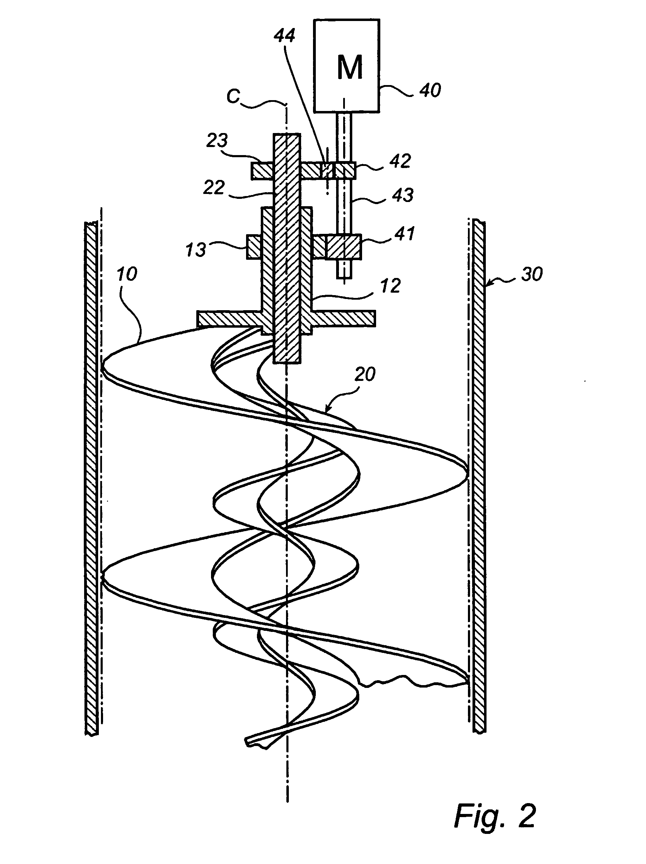

The conveyor comprises as its main components an outer screw 10, an inner screw 20 and a pipe 30, as is evident from Figs 1 and 2. The screws 10, 20 and the pipe 30 are concentrically arranged along a centre axis C.

The outer screw 10 comprises a vane 11 which in the radial direction extends between a first inner radius r₁₀ and a first outer radius R₁₀. The vane 11 describes a helix about a geometric cylinder with the same radius as the inner radius r₁₀ of the vane 11.

The inner screw 2 comprises, similar to the outer screw 10, a vane 21 which extends between a second inner radius r₂₀ and a second outer radius R₂₀. The vane 21 describes a helix about a geometric cylinder with the same radius as the inner radius r₂₀ of the vane 21.

According to a preferred embodiment, the dimensions are selected so that the inner radius r₁₀ of the outer screw 10 is 25 mm and its outer radius R₁₀ is 50 mm. The outer screw 10 has a pitch S₁₀, i.e. the distance along the centre axis C between two succeeding turns, which is 100 mm. The inner radius r₂₀ of the inner screw 20 is 9 mm and its outer radius R₂₀ is 24 mm. The inner screw 20 has a pitch S₂₀ which is 80 mm.

The pipe 30 has an inner diameter which is somewhat greater than the outer diameter R₁₀ of the outer screw 10, see Fig. 2. Since the screw 10, 20 can tolerate a certain degree of deflection, the pipe 30 can be made in a simple manner of an inexpensive material. For instance, it is possible to use inexpensive plastic pipes for most applications.

For the two shaft-less screws 10, 20 to be rotated, shaft ends 12, 22 are fastened to the vanes 11, 21. The shaft end 22 of the inner screw 20 is supported at the shaft end 12 of the outer screw 10, the latter shaft end 12 consequently being tubular (see Fig. 2).

The shaft ends 12, 22 of the screws 10, 20 can easily be provided with gear rims 13, 23, belt pulleys or the like, for connection to corresponding drive elements 41, 42 on a drive shaft 43 connected to a motor 40. For the two screws 10, 20 to rotate in different directions, it is possible to arrange, for example, an extra gear wheel 44 between the rim 23 on the shaft 22 of the inner screw 20 and the gear wheel 42 on the drive.shaft 43 connected to the motor 40.

For the sake of clarity, the supports of the various components in the surrounding construction have been omitted, but of course, for instance, the motor 40 is to be fixed, and the intermediate gear wheel 44 and the shaft end 12 of the outer screw 10 are to be rotationally mounted.

The inner screw 20 extends essentially along the entire axial length of the outer screw 10, which makes it possible to obtain good disintegration and a high conveying speed in the manner as desired over the entire length of the conveyor. In addition, it will be extremely easy to mount the inner screw 20 in relation to the outer screw 10 if the inner screw 20 extends along the entire length of the outer screw 10.

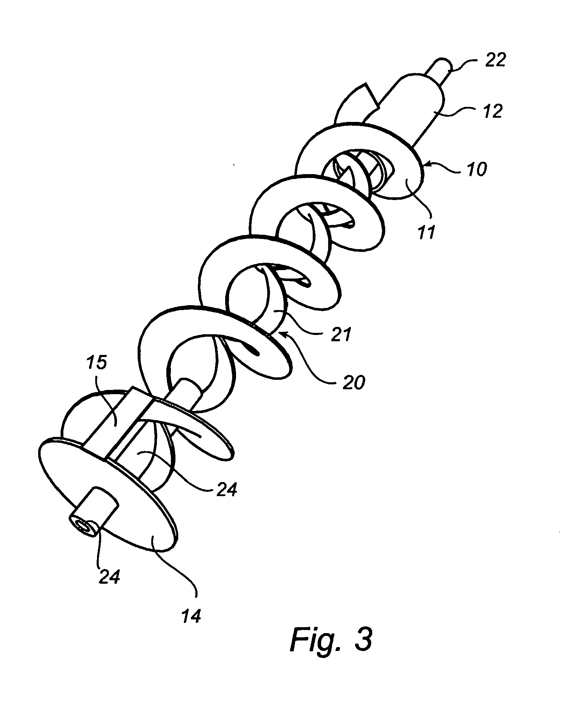

In order to further guide the motion of the inner screw 20 inside the outer screw 10, the inner screw 20 can be provided with a shaft end 24 (see Fig. 3) which is mounted in an end portion 14 of the outer screw 10. As is evident from Fig. 3, the outer screw 10 comprises an end plate 14 to which the vane 11 is connected. In order to stabilise the construction, a stay 15 can be arranged between the end plate 14 and the vane 11, so that it connects to the vane 11 at an axial distance from the end plate 14. The shaft end 24 of the inner screw 20 can easily be mounted relative to the outer screw 10 by extending through a hole in the end plate 14.

To facilitate cleaning of the conveyor, a foraminated water hose (not shown) or the like can be inserted into the hole core of the inner screw. The water hose can be fixedly or intermittently mountable and can be driven continuously or intermittently.

It will be appreciated that many modifications of the inventive embodiments described above are conceivable within the scope of the invention, which is defined in the appended claims.

For example, the screws may have a varying pitch along their axial direction, according to that discussed above, for the purpose of optimising the construction while taking into consideration the fact that the characteristics of the material change, for example, in connection with dewatering. According to one embodiment, the screws have different orientations and are driven at the same speed. Along a certain extent in the axial direction, they have the same pitch, which results in good conveying and dewatering efficiency. Along another extent, located above the first-mentioned extent, the screws have different pitches, which results in good disintegration of the conveyed material. In most cases, it is desirable first to dewater the material and then to disintegrate it.

Moreover, the orientation of the screws can, as mentioned above, be the same for both screws.

According to another alternative embodiment, the conveyor comprises additional screws which are arranged inside each other similarly to the arrangement of the inner screw in the outer screw. For example, the construction may be such as to allow three concentric screws to be arranged inside each other.

According to an alternative embodiment, one or more of the screws comprise two or more vanes, each of which describes a helix in the same way as the shown individual vanes for each screw. This construction corresponds to the mechanical component in form of a screw with double threads or leads. For example, the construction can be such that the outer screw has two vanes and the inner has one vane. The choice of one or more leads for each screw largely depends on whether the conveying speed or the disintegrating capacity is prioritised.

It should also be noted that the screws need not have the same axial extent in all applications. For example, the construction can be such that the inner screw begins at a distance from the end of the outer screw. This may be appropriate when the conveyor extends into water so that the risk of clogging is small. This construction can, for instance, be such that the outer screw has an inner shaft along a certain distance and the inner screw is supported at the end of the inner shaft of the outer screw.

According to another alternative embodiment, the vanes made up of flanges are inclined relative to the horizontal plane. Suitably the vane of the outer screw is inclined so that the inner part is located at a lower level than the outer, which makes the outer screw plough the material inwards to the inner screw. Correspondingly, the vane of the inner screw is inclined so that the inner part is located at a higher level than the outer part, which causes the inner screw to plough the material outwards to the outer screw. This results in good conveying efficiency and enables satisfactory disintegration.

These and other variants will be evident from the appended claims.

## Claims

1. A conveyor comprising a pipe (30) and a first screw (10) which is arranged inside and essentially concentrically with the pipe (30) and which is rotatable relative to the pipe (30) and comprises at least one vane (11) which in the radial direction extends between a first inner radius (r₁₀) and a first outer radius (R₁₀) and which describes a first helix on a first geometric cylinder (A) with said first inner radius (r₁₀), the conveyor further comprising a second screw (20) which is arranged essentially concentrically with said pipe (30) and said first screw (10), the second screw (20) being arranged inside said first geometric cylinder, **characterised in that** the second screw, (20) is rotatable relative to the first screw (10) and **in that** the first screw (10) is shaft-less.

2. A conveyor as claimed in claim 1, wherein the second screw (20) comprises at least one vane (21) which in the radial direction extends between a second inner radius (r₂₀) and a second outer radius (R₂₀) and which describes a helix on a second geometric cylinder (B) with said second inner radius (r₂₀).

3. A conveyor as claimed in claim 1 or 2, wherein the second screw (20) is rotatable relative to the pipe (30).

4. A conveyor as claimed in any one of the preceding claims, wherein the second screw (20) describes a helix which is oriented in the opposite direction relative to the helix of the first screw (10).

5. A conveyor as claimed in claim 4, wherein the first and the second screw (10, 20) are arranged to be rotated in different directions about their respective centre axes (C).

6. A conveyor as claimed in any one of claims 1-3, wherein the second screw (20) describes a helix which is oriented in the same direction as the helix of the first screw (10).

7. A conveyor as claimed in claim 6, wherein the first and the second screw (10, 20) are arranged to be rotated in the same direction about their respective centre axes (C).

8. A conveyor as claimed in any one of the preceding claims, wherein the second screw (20) has a pitch (S₂₀) which is smaller than the pitch (S₁₀) of the first screw (10).

9. A conveyor as claimed in any one of the preceding claims, wherein the first screw (10) has a pitch (S₁₀) which varies along its longitudinal direction (C).

10. A conveyor as claimed in any one of the preceding claims, wherein the second screw (20) has a pitch (S₂₀) which varies along its longitudinal direction (C).

11. A conveyor as claimed in any one of the preceding claims, wherein the pipe (30) is fixedly secured in terms of rotation.

12. A conveyor as claimed in any one of the preceding claims, wherein the pipe (30) and the screws (10, 20) are inclined at an angle relative to the horizontal plane.

13. A conveyor as claimed in any one of the preceding claims, wherein the second screw (20) is shaft-less.

## Patentansprüche

1. Förderer, der ein Rohr (30) und eine erste Schnecke (10) umfasst, welche innerhalb und im Wesentlichen konzentrisch mit dem Rohr (30) angeordnet ist und welche bezüglich des Rohres (30) drehbar ist und mindestens einen Flügel (11) umfasst, welcher sich in der radialen Richtung zwischen einem ersten inneren Radius (r₁₀) und einem ersten äußeren Radius (R₁₀) erstreckt und welcher eine erste Schraublinie auf einem ersten geometrischen Zylinder (A) mit dem ersten inneren Radius (r₁₀) beschreibt, wobei der Förderer eine zweite Schnecke (20) umfasst, welche im Wesentlichen konzentrisch mit dem Rohr (30) angeordnet ist und wobei die erste Schnecke (10) und die zweite Schnecke (20) innerhalb des ersten geometrischen Zylinders angeordnet ist,
**dadurch gekennzeichnet dass**, die zweite Schnecke (20) bezüglich der ersten Schnecke (10) drehbar ist und **dadurch**, dass die erste Schnecke (10) keinen Schaft besitzt.

2. Förderer gemäß Anspruch 1, wobei die zweite Schnecke (20) mindestens einen Flügel (21) umfasst, welcher sich in der radialen Richtung zwischen einem zweiten inneren Radius (r₂₀) und einem zweiten äußeren Radius (R₂₀) erstreckt und welcher eine Schraublinie auf einem zweiten geometrischen Zylinder (B) mit dem zweiten inneren Radius (r₂₀) beschreibt.

3. Förderer gemäß Anspruch 1 oder 2, wobei die zweite Schnecke (20) bezüglich des Rohres (30) drehbar ist.

4. Förderer gemäß einem der vorhergehenden Ansprüche, wobei die zweite Schnecke (20) eine Schraublinie beschreibt, welche in der entgegengesetzten Richtung bezüglich der Schraublinie von der ersten Schnecke (10) ausgerichtet ist.

5. Förderer gemäß Anspruch 4, wobei die erste und die zweite Schnecke (10, 20) angeordnet sind, um in unterschiedliche Richtungen über ihre jeweiligen Mittelachsen (C) gedreht zu werden.

6. Förderer gemäß einem der Ansprüche 1-3, wobei die zweite Schnecke (20) eine Schraublinie beschreibt, welche in der gleichen Richtung wie die Schraublinie der ersten Schnecke (10) ausgerichtet ist.

7. Förderer gemäß Anspruch 6, wobei die erste und die zweite Schnecke (10, 20) angeordnet sind, um in der gleichen Richtung über ihre jeweiligen Mittelachsen (C) gedreht zu werden.

8. Förderer gemäß einem der vorhergehenden Ansprüche, wobei die zweite Schnecke (20) eine Steigung (S₂₀) besitzt, welche kleiner als die Steigung (S₁₀) der ersten Schnecke (10) ist.

9. Förderer gemäß einem der vorhergehenden Ansprüche, wobei die erste Schnecke (10) eine Steigung (S₁₀) besitzt, welche entlang ihrer Längsrichtung (C) variiert.

10. Förderer gemäß einem der vorhergehenden Ansprüche, wobei die zweite Schnecke (20) eine Steigung (S₂₀) besitzt, welche entlang ihrer Längsrichtung (C) variiert.

11. Förderer gemäß einem der vorhergehenden Ansprüche, wobei das Rohr (30) bezüglich Rotation unbeweglich festgestellt ist.

12. Förderer gemäß einem der vorhergehenden Ansprüche, wobei das Rohr (30) und die Schnecken (10, 20) in einem Winkel relativ zu der horizontalen Ebene geneigt sind.

13. Förderer gemäß einem der vorhergehenden Ansprüche, wobei die zweite Schnecke (20) keinen Schaft besitzt.

## Revendications

1. Convoyeur comprenant un tuyau (30) et une première vis (10) qui est agencée à l'intérieur et essentiellement de manière concentrique avec le tuyau (30) et qui peut être mise en rotation relativement au tuyau (30) et comprend au moins une aube (11) qui, dans la direction radiale, s'étend entre un premier rayon interne (r₁₀) et un premier élément externe (R₁₀) et qui décrit une première hélice sur un premier cylindre géométrique (A) avec ledit premier rayon interne (r₁₀), le convoyeur comprenant en outre une seconde vis (20) qui est agencée essentiellement de manière concentrique avec ledit tuyau (30) et ladite première vis (10), la seconde vis (20) étant agencée à l'intérieur dudit premier cylindre géométrique, **caractérisé en ce que** la seconde vis (20) peut être mise en rotation relativement à la première vis (10) et **en ce que** la première vis (10) est dépourvue d'arbre.

2. Convoyeur selon la revendication 1, dans lequel la seconde vis (20) comprend au moins une aube (21) qui dans la direction radiale, s'étend entre un second rayon interne (r₂₀) et un second rayon externe (R₂₀) et qui décrit une hélice sur un second cylindre géométrique (B) avec ledit second rayon interne (r₂₀) .

3. Convoyeur selon la revendication 1 ou 2, dans lequel la seconde vis (20) peut être mise en rotation relativement au tuyau (30).

4. Convoyeur selon l'une quelconque des revendications précédentes, dans lequel la seconde vis (20) décrit une hélice qui est orientée dans la direction opposée relativement à l'hélice de la première vis (10).

5. Convoyeur selon la revendication 4, dans lequel les première et seconde vis (10, 20) sont agencées afin d'être mises en rotation dans des directions différentes sur leurs axes centraux (C) respectifs.

6. Convoyeur selon l'une quelconque des revendications 1 à 3, dans lequel la seconde vis (20) décrit une hélice qui est orientée dans la même direction que l'hélice de la première vis (10).

7. Convoyeur selon la revendication 6, dans lequel les première et seconde vis (10, 20) sont agencées afin d'être mises en rotation dans la même direction sur leurs axes centraux (C) respectifs.

8. Convoyeur selon l'une quelconque des revendications précédentes, dans lequel la seconde vis (20) a un pas (S₂₀) qui est plus petit que le pas (S₁₀) de la première vis (10).

9. Convoyeur selon l'une quelconque des revendications précédentes, dans lequel la première vis (10) a un pas (S₁₀) qui varie le long de sa direction longitudinale (C).

10. Convoyeur selon l'une quelconque des revendications précédentes, dans lequel la seconde vis (20) a un pas (S₂₀) qui varie le long de sa direction longitudinale (C).

11. Convoyeur selon l'une quelconque des revendications précédentes, dans lequel le tuyau (30) est fermement fixé en termes de rotation.

12. Convoyeur selon l'une quelconque des revendications précédentes, dans lequel le tuyau (30) et les vis (10, 20) sont inclinés selon un angle relativement au plan horizontal.

13. Convoyeur selon l'une quelconque des revendications précédentes, dans lequel la seconde vis (20) est dépourvue d'arbre.
